# EUROPEAN PATENT SPECIFICATION

(11) **EP 2 233 547 B1**
(45) Date of publication and mention of the grant of the patent: **08.08.2018**
(21) Application number: 10157087.7
(22) Date of filing: 19.03.2010
(51) Int. Cl.: C10B 7/10, C10B 57/02, C10B 53/07, C10G 1/10

(54) **METHOD AND CHEMICAL REACTOR FOR PRODUCING GASEOUS HYDROCARBONS DERIVED FROM PLASTIC MATERIALS**
VERFAHREN UND CHEMISCHER REAKTOR ZUR HERSTELLUNG GASFÖRMIGER KOHLENWASSERSTOFFE AUS KUNSTSTOFFMATERIALIEN
PROCÉDÉ ET RÉACTEUR CHIMIQUE POUR LA PRODUCTION D'HYDROCARBURES GAZEUX DÉRIVÉS DE MATÉRIAUX EN PLASTIQUE

(30) Priority: 24.03.2009 IT MI20090455
(43) Date of publication of application: 29.09.2010
(73) Proprietor: Rebai, Paolo, 22100 Como (IT)
(72) Inventor: Rebai, Paolo, 22100 Como (IT)
(74) Representative: Modiano, Micaela Nadia

(56) References cited:
- WO-A1-91/18960
- WO-A2-2008/017953
- JP-A- 9 268 293
- JP-A- 9 279 157
- JP-A- 11 106 758

## Description

The present invention relates to a chemical reactor for producing gaseous hydrocarbons derived mostly from waste plastic materials and to the corresponding method for the implementation of the chemical reaction.

Currently, a number of chemical reactors of different types are known, both in the prototype stage and on an industrial scale, which work in batches or continuously depending on the model.

Such chemical reactors, which can comprise single or cascading circular containers with heights approximately equal to their diameter or with an oval base, are heated typically with gas and/or by electrical resistances for obtaining a reaction temperature between 350 °C and 600 °C.

In the chemical processes that occur in such conventional chemical reactors, which can be different and can work with different types of catalysts, bringing waste plastic material to the reaction temperature cited above is not an easy task, because it requires a high level of energy.

Moreover, management of the melted material inside the reactor is difficult because surface crusts forms thereon which slow the heat exchange and insulate the melted material from the heating walls of the reactor thanks to the insulating properties of plastic materials.

The current solutions, which operate in non-continuous mode, receive the waste plastic materials still in their uncondensed solid state and supply the energy required to raise the temperature mainly in the form of thermal energy transmitted by conduction with particularly long cycle times. This is due to the fact that the material itself is not a good heat conductor and requires, therefore, long time periods for bringing all the volume of the solid material to the reaction temperature.

Another drawback of current solutions consists in that they have large volumes, because material in condensed and already melted form is not allowed; it is allowed only in solid form.

This limitation causes, moreover, problems connected to the supply of the chemical reactor with very long cycle times.

WO 2008/017953 discloses an apparatus for cracking the molecular structure of long chain organic substances.

JP-09279157 discloses an apparatus for the liquefaction of plastics.

JP-09268293 discloses a catalytic cracker for synthetic polymer.

WO 91/18960 discloses a process and device for utilizing organic wastes.

The aim of the present invention is to provide a chemical reactor for producing gaseous hydrocarbons derived mainly from waste plastic materials and the associated method for implementing the chemical reaction which eliminate the drawbacks of the background art.

This aim, as well as these and other objects which will become better apparent hereinafter, are achieved by a chemical reactor for producing gaseous hydrocarbons derived from plastic materials, as defined in claim 1.

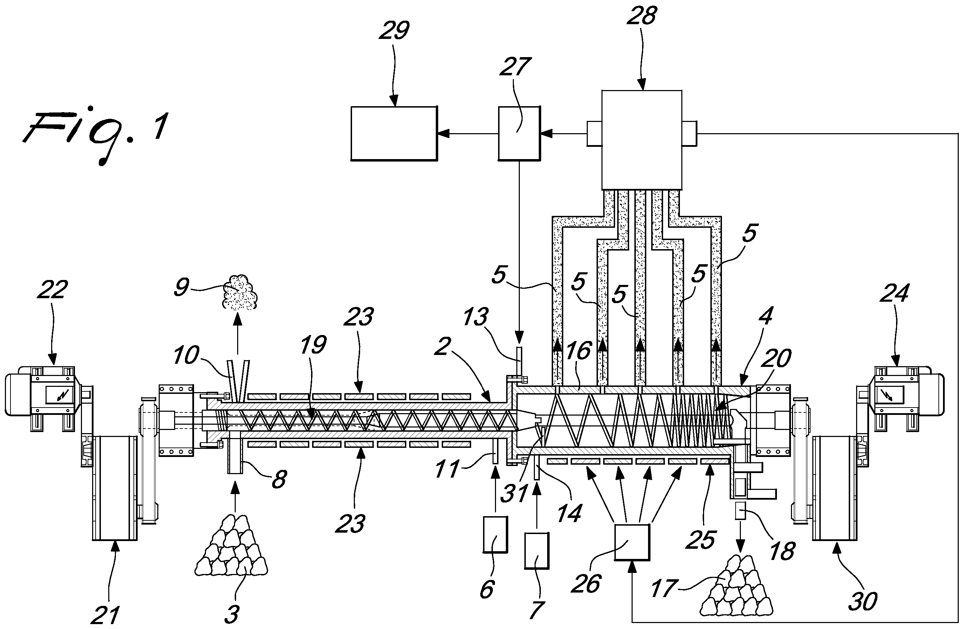

Further characteristics and advantages of the present invention will become better apparent from the description of a preferred but not exclusive embodiment of a chemical reactor for producing gaseous hydrocarbons derived mainly from waste plastic materials and of the associated method for the implementation of the chemical reaction, according to the invention, illustrated by way of non-limiting example in the accompanying drawing, wherein the only figure is a schematic view of an embodiment of a chemical reactor for producing gaseous hydrocarbons derived mainly from waste plastic materials, according to the invention.

With reference to the figure, the chemical reactor for producing gaseous hydrocarbons derived from plastic materials, generally designated by the reference numeral 1, comprises at least one heating chamber 2 for reacting substances 3 introduced in the chemical reactor 1 and at least one chamber 4 for the reaction and mixing of the heated reacting substances 3 in output from the heating chamber 2 in order to obtain reaction products 5.

As will be described further hereinafter, the chemical reactor 1 is adapted for producing gaseous hydrocarbons starting mainly from waste plastic materials such as, for example, but not exclusively, plastic materials of the polyolefin and polyurethane types.

Such waste plastic materials can, for example, originate from the shredding and recycling of electrical machines, electronic machines and automatic machines, from post-consumer waste and/or industrial waste such as rubber and discarded tires, and can consist of plastic materials that derive from the shredding of cars and the like.

By condensing them at room temperature, the gases produced are moreover adapted to produce liquid hydrocarbons such as diesel fuel or to be used in gas-powered engines or in burners.

More particularly, both chambers 2 and 4, which are functionally connected, have a substantially cylindrical shape with a circular base and are arranged coaxially and continuously with respect to each other so that the flow of material occurs directly from one chamber to the other.

The state transition from a substantially solid/liquid state to a gaseous state of the reacting substances 3 during the chemical reaction inside the chemical reactor 1 and the addition of additives such as, for example, catalysts 6 and inert substances 7, causes the reaction and mixing chamber 4 to have a larger diameter than the heating chamber 2.

In this manner, i.e., with a diameter of the reaction and mixing chamber 4 that is larger than the diameter of the heating chamber 2, it is possible to have a better transition of the reacting substances 3 from the liquid state to the gaseous state.

Substantially proximate to the opposite end to the one connected to the reaction and mixing chamber, the heating chamber 2 has at least one first inlet 8 through which the reacting substances 3 are introduced.

In the heating chamber 2, the reacting substances 3 undergo a heating and compaction treatment, releasing gaseous substances 9 and being dehumidified.

The gaseous substances 9, produced by the reacting substances 3 in the heating chamber 2, are expelled through at least one first outlet 10 arranged substantially proximate to the first inlet 8 or through a plurality of outlets arranged along the extension of the heating chamber 2.

The reaction and mixing chamber 4 has a larger diameter than the heating chamber 2 so that the reacting substances 3 melted to an almost liquid state have a larger free surface for facilitating the transition from the liquid state to the gaseous state; moreover, in this reaction and mixing chamber 4 the material is no longer pressurized as in the heating chamber 2.

In order to facilitate the chemical reaction inside the chemical reactor 1, at least one second inlet 11 for catalysts 6 is provided proximate to the end of the heating chamber 2 that is connected to the reaction and mixing chamber 4 .

As described in greater detail hereinafter, in order to optimize the mixing of the heated reacting substances 3 in output from the heating chamber 2 that occurs in the reaction and mixing chamber 4, part of the reaction products 27, already condensed to the liquid state, is introduced in the reaction and mixing chamber 4 proximate to the end that is connected to the heating chamber 2 through a third inlet 13.

Because of the high temperatures present inside the entire chemical reactor 1, in order to minimize the risk of explosions of the reacting substances 3, in the reaction and mixing chamber 4, proximate to the end that is connected to the heating chamber 2, a fourth input 14 is provided through which inert substances 7, such as, for example, nitrogen-based substances, are introduced.

Finally, the reaction and mixing chamber 4 has at least one permeable surface 16 formed peripherally on said reaction and mixing chamber 4 for allowing the outflow of the reaction products 5 in the gaseous state.

Advantageously, the permeable surface 16 is connected by means of pipes, which are optionally heated, to condensation means 28, which will be described in more detail hereinafter.

Proximate to the permeable surface 16, the shape of the reaction and mixing chamber 4 can be bell-like for limitation of the risk of clogging by carbon residues.

Advantageously, there can be an adapted cleaning system in order to allow the cleaning of the reaction and mixing chamber 4.

Moreover, in order to improve further the cleaning of the reaction and mixing chamber 4, a plurality of bell-shaped permeable surfaces 16 can be installed so as to allow the cleaning of the ones that are clogged or dirty.

Differently, the residual material 17 and the unreacted solid portion of the heated reacting substances 3 is expelled through at least one second outlet 18 arranged substantially proximate to the end of the reaction and mixing chamber 4 on the side opposite to the heating chamber 2.

Advantageously, the end portion of the reaction and mixing chamber 4 can be slightly conical in order to avoid the unintentional escape of the portions of the reacting substances 3 in the liquid state that have not yet been converted into reaction products 5 in the gaseous state.

According to the invention, the heating of the reacting substances 3 occurs as a consequence of their mechanical friction by way of first screw means 19 accommodated in the heating chamber 2.

The implementation of the chemical reaction, as well as the further rise and/or holding of the temperature of the reacting substances 3 up to the reaction temperature, occur thanks to the presence of second screw means 20 accommodated in the reaction and mixing chamber 4.

The first screw means 19 comprise a first screw of the screw feeder/extruder type with a thread that has a substantially constant pitch, which is oriented coaxially to the heating chamber 2.

Such first screw of the screw feeder/extruder type is actuated, through a first mechanical transmission 21, by first motor means 22, with power levels in the order of 250 kW. Engines of such power are necessary because the first screw means 19 work with reacting substances 3 that are in the solid state and are therefore very resistant.

If the friction of the reacting substances 3 through the first screw means 19 is not sufficient to raise correctly the temperature of said reacting substances 3, first heating means 23 are provided which are associated with the heating chamber 2 and consist, for example, of one or more of the following heating systems: electric resistors applied to the outside of the walls of the heating chamber 2, open flames, gas-fired radial plates, induction or heating systems inside the cavity of the first screw of the screw feeder/extruder type or other means adapted for the purpose.

The second screw means 20 comprise a second screw of the screw feeder/extruder type with a thread that has a substantially variable pitch and is oriented coaxially with the reaction and mixing chamber 4.

The second screw of the screw feeder/extruder type has a thread whose pitch increases toward the first screw of the screw feeder/extruder type.

Such pitch variation is consistent with the fact that as the chemical process continues, the average particle size distribution of the reacting substances 3 decreases.

Like the first screw, the second screw of the screw feeder/extruder type is actuated, by way of a second mechanical transmission 30, by second motor means 24, with power levels in the order of 15 kW. Motors of such reduced power with respect to the first motor means 22 are sufficient because the second screw means 20 work with reacting substances 3 in the melted and gaseous state,which therefore can be mixed easily. The first and second screw means 19 and 20 have mutually independent rotation rates which can be adjusted so as to determine and control the retention time needed by the chemical process in order to produce the reaction products 5 in the gaseous state.

Adapted mixing paddles 31 can be inserted in the central shaft of the second screw in order to facilitate the mixing of the reacting substances 3.

If the friction of the reacting substances 3 through the second screw means 20 is not sufficient to maintain the reaction temperature of said reacting substances 3, second heating means 25 are provided which are associated with the reaction and mixing chamber 4 and consist, for example, of one or more of the heating systems already described for the first heating means 23.

Advantageously, if burners are used in order to provide the second heating means 25, they can be supplied by at least part of the reaction products 5; in particular by the non-condensable gases 26 that otherwise would be considered waste.

Operation of the chemical reactor 1 and the method for producing gaseous hydrocarbons derived from waste plastic materials are described hereafter.

The method comprises a first step for the entry of the reacting substances 3 in the heating chamber 2 of a chemical reactor 1 through the first inlet 8 at an inlet temperature comprised substantially between room temperature and 200°C.

Subsequently, in the heating chamber 2, thanks to the friction of the reacting substances 3 by means of the first screw means 19 and the first heating means 23, the step for heating the reacting substances 3 takes place which brings said substances from the input temperature to a reaction temperature substantially comprised between 330°C and 500°C.

In this manner, the rise in temperature of the introduced material occurs by introducing thermal energy in the entire mass of material simultaneously in every part of its volume and not only by conduction through the walls of the heating chamber 2.

In this step, in addition to the heating of the reacting substances 3, compaction of said substances also occurs, making them pass from the solid state to the liquid state, and degassing and removal of humidity from said reacting substances 3 through the first outlet 10 occur as well.

Thereafter, in order to facilitate the occurrence of the chemical reaction, catalysts 6 is added to the reacting substances 3 through the second inlet 11. In this manner, the first step of feeding catalysts is implemented.

More precisely, the added catalysts 6 can correspond to a percentage, with respect to the total of the reacting substances 3, that is comprised between 1% and 5%.

Simultaneously with the first feeding step, it is possible to provide a second feeding step and a third feeding step, which consist, respectively, in introducing the inert substances 7 through the fourth inlet 14 in order to minimize the risk of explosions during the chemical reaction and in introducing part of the reaction products 27, already condensed to the liquid state, through the third inlet 13 in order to optimize the mixing of the heated reacting substances 3 in output from the heating chamber 2.

This part of the reaction products 27 can correspond to a percentage, with respect to the total of the reaction products 5, that is comprised between 1% and 15%.

In any case, this percentage is not lost but would be transformed again into already-condensed reaction products 27.

Once all several feeding steps have ended, the chemical reaction for producing the reaction products 5 in the gaseous state from the reacting substances 3 occurs in the reaction and mixing chamber 4.

In this chemical reaction, the reaction temperature is kept substantially constant and comprised between 350°C and 400°C thanks to the friction heat generated by the second screw means 20 and by the second heating means 25.

Simultaneously with the chemical reaction, the steps occur, respectively, of expelling the reaction products 5 in the gaseous state from the reaction and mixing chamber 4 through the permeable surface 16, which has a bell-like/conical shape, in order to avoid clogging, and of expelling the residual material 17 and the solid portion that has not reacted of the reacting substances 3 through the second outlet 18.

The reaction products 5 in the gaseous state can be subsequently distilled and condensed or just condensed in adapted condenser means 28, in order to obtain hydrocarbons 27 in the liquid state, which can be easily stored in adapted storage means 29. The distillation (and the condensation that follows) makes it possible to obtain hydrocarbons 27 in the liquid state of different qualities.

The process described above is obtained continuously on the flow of material introduced by calibration of the diameters of the two cylindrical chambers 2 and 4 and by variation of the speeds of the screws of the screw feeder/extruder type in order to adapt to the reaction rate.

In practice it has been found that the chemical reactor for producing gaseous hydrocarbons derived mainly from waste plastic materials and the corresponding method for the implementation of the chemical reaction, according to the present invention, fully achieve the intended aim and objects, since they allow the continuous production of gaseous hydrocarbons starting from a waste product with the advantage for the environment of being recycled and in particular with the advantage that it can be transformed into an intermediate product that can be stored and easily transported for use as diesel fuels also, but not exclusively, for automotive propulsion, for power generators and the like.

Another advantage of the chemical reactor and of the associated method according to the present invention consists in that it uses the mechanical energy necessary to move the reacting substances as thermal energy in order to raise the temperature of the melted material to the reaction temperature.

Another advantage of the chemical reactor and of the associated method according to the present invention consists in that it is not necessary to empty the reactor at each cycle to discharge the residual solid and waste part of the process because they are already separated by the steps of the process itself.

In this manner, cycle times are reduced because the time required by the cooling and heating steps of the chemical reactor regarding its loading and unloading is reduced.

In practice, the materials used, as long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A chemical reactor for producing gaseous hydrocarbons derived from plastic materials, comprising at least one chamber (2) for heating reacting substances (3) introduced in the chemical reactor (1) and at least one chamber (4) for the reaction and mixing of said heated reacting substances (3) in output from said at least one heating chamber (2) in order to obtain reaction products (5), said at least one reaction and mixing chamber (4) being functionally connected to said at least one heating chamber (2), said at least one heating chamber (2) and said at least one reaction and mixing chamber (4) being coaxial and contiguous and said at least one heating chamber (2) having a smaller diameter than said at least one reaction and mixing chamber (4), **characterized in that** it comprises first screw means (19), which are accommodated within said at least one heating chamber (2) to heat said reacting substances (3) as a consequence of the mechanical friction of said reacting substances (3), and second screw means (20), which are accommodated in said at least one reaction and mixing chamber (4) to maintain and/or further raise the temperature of said reacting substances (3) to a reaction temperature and for the implementation of the chemical reaction, wherein if the friction of the reacting substances (3) through the second screw means (20) is not sufficient to maintain the reaction temperature of said reacting substances (3), a heating means (25) is provided which is associated with the reaction and mixing chamber (4), said first (19) and second (20) screw means being respectively actuated, through respective first and second mechanical transmissions (21, 30), by first (22) and second (24) motor means, and **in that** said at least one heating chamber (2) is provided, proximate to the end of the heating chamber (2) that is connected to the at the least one reaction and mixing chamber (4), with at least one inlet (11) for catalysts (6).

2. The chemical reactor according to claim 1, **characterized in that** said at least one heating chamber (2) has a cylindrical shape with a circular base, and **in that** said first screw means (19) comprise a first screw of the screw feeder/extruder type, which is oriented coaxially with said at least one heating chamber (2), said first screw of the screw feeder/extruder type being driven by said first motor means (22).

3. The chemical reactor according to one or more of the preceding claims, **characterized in that** said at least one reaction and mixing chamber (4) has a substantially cylindrical shape with a circular base and **in that** said second screw means (20) comprise a second screw of the screw feeder/extruder type with a thread that has a substantially variable pitch and is oriented coaxially with said at least one reaction and mixing chamber (4), said second screw of the screw feeder/extruder type being driven by said second motor means (24).

4. The chemical reactor according to one or more of the preceding claims, **characterized in that** said second screw of the screw feeder/extruder type has a thread with a pitch that increases in the direction of said first screw of the screw feeder/extruder type.

5. The chemical reactor according to one or more of the preceding claims, **characterized in that** it comprises first heating means (23), which are associated with said at least one heating chamber (2) for the further heating of said reacting substances (3).

6. The chemical reactor according to one or more of the preceding claims, **characterized in that** it comprises second heating means (25), which are associated with said at least one reaction and mixing chamber (4) for maintaining said reaction temperature.

7. A method for producing gaseous hydrocarbons derived from waste plastic materials, **characterized in that** it comprises:
- a step for introducing reacting substances (3) at an input temperature in a heating chamber (2) of a chemical reactor (1),
- a step for heating said reacting substances (3) from said input temperature to a reaction temperature,
- a chemical reaction for the production of reaction products (5) in the gaseous state from said reacting substances (3) heated in a reaction and mixing chamber (4) that is functionally connected to said at least one heating chamber (2) and coaxial and contiguous with said at least one heating chamber (2), said at least one heating chamber (2) having a smaller diameter than said at least one reaction and mixing chamber (4); said heating chamber (2) and said reaction and mixing chamber (4) being each provided with screw means (19, 20) actuated, through respective first and second mechanical transmission (21, 30), by independent motor means (22, 24);
- a step for expelling said reaction products (5) in the gaseous state from said at least one reaction and mixing chamber (4),
- a step for expelling the residual material (17) and the solid portion that has not reacted or cannot react of said heated reacting substances (3), and further comprises a step of adding catalysts (6) in the heating chamber (2) through at least one inlet (11), proximate to the end of the heating chamber (2) that is connected to the at least one reaction and mixing chamber (4).

8. The method according to claim 7, **characterized in that** it comprises a first step for adding catalysts (6) to said reagent substances (3) heated in said heating step in order to catalyze said chemical reaction, said first adding step being performed after said heating step and before said chemical reaction.

9. The method according to claims 7 and 8, **characterized in that** it comprises a second step and a third step of feeding inert substances (7), respectively, for minimizing the risk of explosions during said chemical reaction, and hydrocarbons in the liquid state (27), said second and third feeding steps being performed after said heating step and before said chemical reaction.

## Patentansprüche

1. Ein chemischer Reaktor zur Herstellung gasförmiger Kohlenwasserstoffe aus Kunststoffmaterialien, der Folgendes umfasst: mindestens eine Kammer (2) zur Erhitzung reagierender Stoffe (3), die in den chemischen Reaktor (1) gegeben werden, und mindestens eine Kammer (4) für die Reaktion und das Mischen der erhitzten reagierenden Stoffe (3) in der Ausgabe von der mindestens einen Heizkammer (2), um Reaktionsprodukte (5) zu erhalten; wobei die mindestens eine Reaktions- und Mischkammer (4) funktionell mit der mindestens einen Heizkammer (2) verbunden ist, wobei die mindestens eine Heizkammer (2) und die mindestens eine Reaktions- und Mischkammer (4) koaxial und **benachbart** sind und die mindestens eine Heizkammer (2) einen kleineren Durchmesser hat als die mindestens eine Reaktions- und Mischkammer (4); **dadurch gekennzeichnet, dass** er erste Schnecken-Mittel (19) umfasst, die in der mindestens einen Heizkammer (2) untergebracht sind, um die reagierenden Stoffe (3) infolge der mechanischen Reibung der reagierenden Stoffe (3) zu erhitzen, und zweite Schnecken-Mittel (20), die in der mindestens einen Reaktions- und Mischkammer (4) untergebracht sind, um die Temperatur der reagierenden Stoffe (3) aufrechtzuerhalten und/oder auf eine Reaktionstemperatur und zur Implementierung der chemischen Reaktion weiter anzuheben, wobei, wenn die Reibung der reagierenden Stoffe (3) durch die zweiten Schnecken-Mittel (20) nicht ausreicht, um die Reaktionstemperatur der reagierenden Stoffe (3) aufrechtzuerhalten, ein Heizmittel (25) bereitgestellt ist, welches mit der Reaktions- und Mischkammer (4) verknüpft ist;
wobei die ersten (19) und zweiten (20) Schnecken-Mittel über entsprechende erste und zweite mechanische Getriebe (21, 30), von jeweiligen ersten (22) und zweiten (24) Motormitteln, jeweils angetrieben werden; und dadurch, dass die mindestens eine Heizkammer (2) nahe dem Ende der Heizkammer (2), die mit der mindestens einen Reaktions- und Mischkammer (4) verbunden ist, mit mindestens einem Einlass (11) für Katalysatoren (6) ausgestattet ist.

2. Der chemische Reaktor gemäß Anspruch 1, **dadurch gekennzeichnet, dass** die mindestens eine Heizkammer (2) eine zylindrische Form mit einer kreisförmigen Basis hat, und dadurch, dass die ersten Schnecken-Mittel (19) eine erste Schnecke vom Schneckengeber-/Extruder-Typ umfassen, die koaxial mit der mindestens einen Heizkammer (2) ausgerichtet ist; wobei die erste Schnecke vom Schneckengeber-/Extruder-Typ von den ersten Motormitteln (22) angetrieben wird.

3. Der chemische Reaktor gemäß einem oder mehreren der obigen Ansprüche, **dadurch gekennzeichnet, dass** die mindestens eine Reaktions- und Mischkammer (4) eine im Wesentlichen zylindrische Form mit einer kreisförmigen Basis hat, und dadurch, dass die zweiten Schnecken-Mittel (20) eine zweite Schnecke vom Schneckengeber-/Extruder-Typ mit einem Gewinde umfassen, das eine im Wesentlichen variable Steigung hat und koaxial mit der mindestens einen Reaktions- und Mischkammer (4) ausgerichtet ist, wobei die zweite Schnecke vom Schneckenaufgeber-/Extruder-Typ von den zweiten Motormitteln (24) angetrieben wird.

4. Der chemische Reaktor gemäß einem oder mehreren der obigen Ansprüche, **dadurch gekennzeichnet, dass** die zweite Schnecke vom Schneckenaufgeber-/Extruder-Typ ein Gewinde mit einer Steigung hat, die in die Richtung der ersten Schnecke vom Schneckenaufgeber-/Extruder-Typ zunimmt.

5. Der chemische Reaktor gemäß einem oder mehreren der obigen Ansprüche, **dadurch gekennzeichnet, dass** er erste Heizmittel (23) umfasst, die zum weiteren Erhitzen der reagierenden Stoffe (3) mit der mindestens einen Heizkammer (2) verbunden sind.

6. Der chemische Reaktor gemäß einem oder mehreren der obigen Ansprüche, **dadurch gekennzeichnet, dass** er zweite Heizmittel (25) umfasst, die zum Aufrechterhalten der Reaktionstemperatur mit der mindestens einen Reaktions- und Mischkammer (4) verbunden sind.

7. Ein Verfahren zur Herstellung gasförmiger Kohlenwasserstoffe aus Kunststoff-Abfallmaterialien, **dadurch gekennzeichnet, dass** es Folgendes umfasst:
- einen Schritt zum Einfüllen reagierender Stoffe (3) in eine Heizkammer (2) eines chemischen Reaktors (1) bei einer Eingabetemperatur;
- einen Schritt zum Erhitzen der reagierenden Stoffe (3) von der Eingabetemperatur auf eine Reaktionstemperatur;
- eine chemische Reaktion zur Herstellung von Reaktionsprodukten (5) im gasförmigen Zustand aus den reagierenden Stoffen (3), erhitzt in einer Reaktions- und Mischkammer (4), die funktionell mit der mindestens einen Heizkammer (2) verbunden und koaxial mit und benachbart zu der mindestens einen Heizkammer (2) ist, wobei die mindestens eine Heizkammer (2) einen kleineren Durchmesser hat als die mindestens eine Reaktions- und Mischkammer (4); wobei die Heizkammer (2) und die Reaktions- und Mischkammer (4) jeweils mit Schnecken-Mitteln (19, 20) ausgestattet sind, die über entsprechende erste und zweite mechanische Getriebe (21, 30) von unabhängigen Motormitteln (22, 24) angetrieben werden;
- einen Schritt des Ausstoßens der Reaktionsprodukte (5) im gasförmigen Zustand aus der mindestens einen Reaktions- und Mischkammer (4);
- einen Schritt des Ausstoßens des Restmaterials (17) und des festen Anteils der erhitzten reagierenden Stoffe (3), der nicht reagiert hat oder nicht reagieren kann,
und weiter einen Schritt umfassend, indem Katalysatoren (6) in die Heizkammer (2) durch mindestens einen Einlass (11) nahe dem Ende der Heizkammer (2), der mit der mindestens einen Reaktions- und Mischkammer (4) verbunden ist, hinzugegeben werden.

8. Das Verfahren gemäß Anspruch 7, **dadurch gekennzeichnet, dass** es einen ersten Schritt eines Hinzufügens von Katalysatoren (6) zu den reagierenden Stoffen (3) umfasst, die in dem Erhitzungsschritt erhitzt werden, um die chemische Reaktion zu katalysieren, wobei der erste Schritt des Hinzufügens nach dem Erhitzungsschritt und vor der chemischen Reaktion durchgeführt wird.

9. Das Verfahren gemäß den Ansprüchen 7 und 8, **dadurch gekennzeichnet, dass** es einen zweiten Schritt und einen dritten Schritt des Hinzufügens inerter Stoffe (7) zur Minimierung des Explosionsrisikos während der chemischen Reaktion, beziehungsweise von Kohlenwasserstoffen im flüssigen Zustand (27), umfasst, wobei die zweiten und dritten Schritte des Hinzufügens nach dem Erhitzungsschritt und vor der chemischen Reaktion durchgeführt werden.

## Revendications

1. Réacteur chimique destiné à produire des hydrocarbures gazeux dérivés de matériaux plastiques, comprenant au moins une chambre (2) destinée à chauffer des substances de réaction (3) introduites dans le réacteur chimique (1) et au moins une chambre (4) destinée à la réaction et au mélange desdites substances de réaction chauffées (3) fournies par ladite au moins une chambre de chauffage (2) afin d'obtenir des produits de réaction (5), ladite au moins une chambre de réaction et de mélange (4) étant reliée à ladite au moins une chambre de chauffage (2), ladite au moins une chambre de chauffage (2) et ladite au moins une chambre de réaction et de mélange (4) étant coaxiales et contiguës et ladite au moins une chambre de chauffage (2) ayant un diamètre inférieur à ladite au moins une chambre de réaction et de mélange (4), **caractérisé en ce qu'**il comprend un premier moyen à vis (19), qui est placé dans ladite au moins une chambre de chauffage (2) afin de chauffer lesdites substances de réaction (3) à la suite du frottement mécanique desdites substances de réaction (3), et un second moyen à vis (20), qui est placé dans ladite au moins une chambre de réaction et de mélange (4) afin de maintenir et/ou d'augmenter la température desdites substances de réaction (3) jusqu'à une température de réaction et d'effectuer la réaction chimique, dans lequel, si le frottement des substances de réaction (3) par le second moyen à vis (20) n'est pas suffisant pour maintenir la température de réaction desdites substances de réaction (3), un moyen de chauffage (25) est prévu et est associé à la chambre de réaction et de mélange (4),
lesdits premier (19) et second (20) moyens à vis étant respectivement déclenchés, par le biais d'une premier et d'une seconde transmissions mécaniques respectives (21, 30), par un premier (22) et un second (24) moteurs, et **en ce que** ladite au moins une chambre de chauffage (2) est munie, près de l'extrémité de la chambre de chauffage (2) qui est reliée à la au moins une chambre de réaction et de mélange (4), d'au moins une admission (11) destinée à des catalyseurs (6).

2. Réacteur chimique selon la revendication 1, **caractérisé en ce que** ladite au moins une chambre de chauffage (2) possède une forme cylindrique avec une base circulaire, et **en ce que** ledit premier moyen à vis (19) comprend une première vis de type alimentateur/extrudeuse à vis, qui est orientée coaxialement avec ladite au moins une chambre de chauffage (2), ladite première vis de type alimentateur/extrudeuse à vis étant entraînée par ledit premier moteur (22).

3. Réacteur chimique selon une ou plusieurs des revendications précédentes, **caractérisé en ce que** ladite au moins une chambre de réaction et de mélange (4) possède une forme sensiblement cylindrique avec une base circulaire et **en ce que** ledit second moyen à vis (20) comprend une seconde vis de type alimentateur/extrudeuse à vis avec un filetage qui possède un pas sensiblement variable et est orientée coaxialement avec ladite au moins une chambre de réaction et de mélange (4), ladite seconde vis de type alimentateur/extrudeuse à vis étant entraînée par ledit second moteur (24).

4. Réacteur chimique selon une ou plusieurs des revendications précédentes, **caractérisé en ce que** ladite seconde vis de type alimentateur/extrudeuse à vis possède un filetage avec un pas qui augmente dans la direction de ladite première vis de type alimentateur/extrudeuse à vis.

5. Réacteur chimique selon une ou plusieurs des revendications précédentes, **caractérisé en ce qu'**il comprend un premier moyen de chauffage (23), qui est associé à ladite au moins une chambre de chauffage (2) de façon à chauffer davantage lesdites substances de réaction (3).

6. Réacteur chimique selon une ou plusieurs des revendications précédentes, **caractérisé en ce qu'**il comprend un second moyen de chauffage (25), qui est associé à ladite au moins une chambre de réaction et de mélange (4) afin de maintenir ladite température de réaction.

7. Procédé de production d'hydrocarbures gazeux dérivés de déchets de matériaux plastiques, **caractérisé en ce qu'**il comprend :
- une étape d'introduction de substances de réaction (3) à une température d'entrée dans une chambre de chauffage (2) d'un réacteur chimique (1),
- une étape de chauffage desdites substances de réaction (3) de ladite température d'entrée jusqu'à une température de réaction,
- une réaction chimique destinée à produire des produits de réaction (5) à l'état gazeux à partir desdites substances de réaction (3) chauffées dans une chambre de réaction et de mélange (4) qui est reliée à ladite au moins une chambre de chauffage (2) et coaxiale et contiguë avec ladite au moins une chambre de chauffage (2), ladite au moins une chambre de chauffage (2) ayant un diamètre inférieur à ladite au moins une chambre de réaction et de mélange (4) ; ladite chambre de chauffage (2) et ladite chambre de réaction et de mélange (4) étant chacune munie de moyens à vis (19, 20) déclenchés par une première et une seconde transmissions mécaniques respectives (21, 30), par des moteurs indépendants (22, 24) ;
- une étape d'expulsion desdits produits de réaction (5) à l'état gazeux depuis ladite au moins une chambre de réaction et de mélange (4),
- une étape d'expulsion du matériau résiduel (17) et de la partie solide qui n'a pas fait réagir ou qui ne peut pas faire réagir lesdites substances de réaction chauffées (3), et qui comprend en outre une étape d'ajout de catalyseurs (6) dans la chambre de chauffage (2) par le biais d'au moins une admission (11), près de l'extrémité de la chambre de chauffage (2) qui est reliée à la au moins une chambre de réaction et de mélange (4).

8. Procédé selon la revendication 7, **caractérisé en ce qu'**il comprend une première étape d'ajout de catalyseurs (6) auxdites substances de réaction (3) chauffées à ladite étape de chauffage afin de catalyser ladite réaction chimique, ladite première étape d'ajout étant exécutée après ladite étape de chauffage et avant ladite réaction chimique.

9. Procédé selon les revendications 7 et 8, **caractérisé en ce qu'**il comprend une seconde étape et une troisième étape d'alimentation en substances inertes (7), respectivement, afin de minimiser le risque d'explosions pendant ladite réaction chimique, et en hydrocarbures à l'état liquide (27), lesdites seconde et troisième étapes d'alimentation étant exécutées après ladite étape de chauffage et avant ladite réaction chimique.
